# EUROPEAN PATENT SPECIFICATION

(11) **EP 3 857 479 B1**
(45) Date of publication and mention of the grant of the patent: **05.11.2025**
(21) Application number: 19865343.8
(22) Date of filing: 27.09.2019
(51) Int. Cl.: G06Q 10/06, G06Q 10/0639, G06Q 50/20

(54) **EDUCATIONAL BENCHMARKING SYSTEM**
PÄDAGOGISCHES BENCHMARKING-SYSTEM
SYSTÈME D'ÉVALUATION COMPARATIVE D'ENSEIGNEMENT

(30) Priority: 28.09.2018 AU 2018903687
(43) Date of publication of application: 04.08.2021
(73) Proprietor: PEOPLEBENCH PTY LTD, West End, Queensland 4101 (AU)
(72) Inventor: JOHNSTON, Fleur, Bardon, QLD 4065 (AU); HENNESSY, Michael, Tweed Heads, NSW 2485 (AU)
(74) Representative: Richardt Patentanwälte PartG mbB
(86) International application number: PCT/AU2019/051053
(87) International publication number: WO 2020/061647

(56) References cited:
- WO-A1-2011/004394
- US-A1- 2003 113 698
- US-A1- 2013 226 674
- US-A1- 2013 230 842

## Description

### TECHNICAL FIELD

The present invention relates to benchmarking, and in particular, although not exclusively, to benchmarking of educational institutions, such as schools.

### BACKGROUND ART

A common problem among schools and other educational systems is that it is difficult to secure an efficient and high-performing teaching workforce. However, without an efficient and high-performing teaching workforce, the outcomes for children in classrooms will suffer.

In short, there is no simple way for schools to get a good understanding of an optimal profile of their workforce. In the absence of any objective evidence, school boards and principals are forced to rely on intuition and personal experience when making both strategic (e.g. determining the ideal composition of the school workforce over the next 3-5 years and planning for how to attract, develop and retain the right staff accordingly) and operational (e.g. determining the right combination of permanent and casual teachers in a given school term) decisions.

A problem with such approach is that it is highly subjective. Principals' and school boards' experience may be limited to a certain type of school in a certain context and may not be relevant to the current educational workforce, the nature of which may have changed dramatically over time. This creates a risk of inaccurate decision making.

A further problem is that simply relying on intuition and experience generally results in reactionary management of turnover, absenteeism, and the like, rather than proactive management of the workforce of the school.

Further again, in order to allow for meaningful and reliable inferences to be drawn from data, data sets needs to be sufficiently large. Schools generally do not generate sufficient amounts of data to allow for any robust analysis, and even the largest Catholic and independent systems of schools in Australia are too small to gather accurate and meaningful data on their workforce.

Accordingly, schools and educations are not as productive places as they could be for teachers to work, and sub-optimal outcomes to students are a result. US2013/226674A1 discloses a benchmarking system for evaluating the performance of an individual (e.g. student) with reference to other stakeholders (e.g. teachers), but fails to disclose determining statistical relationships relating to a plurality of different educational institutions.

As such, there is clearly a need for an improved educational benchmarking system.

It will be clearly understood that, if a prior art publication is referred to herein, this reference does not constitute an admission that the publication forms part of the common general knowledge in the art in Australia or in any other country.

### SUMMARY OF INVENTION

The present invention is directed to an educational benchmarking system, which may at least partially overcome at least one of the abovementioned disadvantages or provide the consumer with a useful or commercial choice.

With the foregoing in view, the present invention in one form, resides broadly in a an educational benchmarking system configured to:
receive workforce data defining workforce characteristics and outcome data defining educational outcomes, the workforce data and the outcome data relating to a plurality of different educational institutions;
determine, based upon the workforce data and the outcome data, one or more statistical relationships between workforce characteristics and educational outcomes;
determine, based upon the one or more statistical relationships, one or more parameters for workforce characteristics, the one or more parameters corresponding to at least one educational outcome; and
compare, one or more characteristics of an educational institution or group thereof to the one or more parameters for workforce characteristics, to enable areas for improvement to be identified for that educational institution or group of institutions.

Advantageously, the system enables enable high quality, data informed decisions about an educational institution to be made, and in particular in relation to workforces, with the purpose of improving educational outcomes.

Preferably, the educational institutions comprise schools. The schools may comprise government and non-government schools.

Preferably, the workforce data includes absenteeism data. Suitably, the workforce data includes recruitment and turnover data, demographic data, performance data, classification data, education data, professional development data, health and safety data, and cost data.

Preferably, the outcome data includes student result data, such as NAPLAN result data in Australia, and similar result data in other markets. Suitably, the outcome data includes absenteeism data relating to students, completion rates, scores and post school destinations.

Preferably, the workforce data is automatically verified by the system. Preferably, the outcome data is automatically verified by the system.

The workforce data and/or the outcome data, or a subset thereof, may be automatically retrieved from third-party software or a third-party data source.

Preferably, the one or more parameters for workforce characteristics comprise one or more benchmarks.

Preferably, the step of comparing the characteristics of the educational institution or group of educational institutions to the one or more parameters for workforce characteristics includes generating a report with the one or more parameters for workforce characteristics provided thereon, and the characteristics of the school or group of schools provided in relation thereto.

Preferably, the characteristics of the educational institution (e.g. school) or group of educational institutions are graphically displayed in association with the parameters for workforce characteristics. The characteristics may be provided in a dial gauge or other chart format.

The report may be further configured to show a history of one or more of the parameters over time.

The report may be configured to show parameters that have a_{[CP1]} greatest impact on educational outcomes in the school or group of schools.

The report may be generated according to factors in which a user generating the report is interested.

The report may be generated according to a predefined template.

The report may be interactive. The report may comprise a dashboard, which is updated based upon the user's interactions.

The system may be configured to enable a user to select the plurality of different educational institutions from a larger group of educational institutions. The selection of the plurality of different educational institutions may be performed according to one or more school characteristics. The school characteristics may include year levels taught, Index of Community Socio-Educational Advantage (ICSEA) scores, geographic location, student gender and/or religious affiliation

The system may be configured to enable the user to select the one or more parameters for workforce characteristics from a larger group of parameters.

The system may be configured to compare the characteristics of a school or group of schools to the one or more parameters for workforce characteristics further based upon one or more control variables. The control variables may include school type, sector, location, affiliation, or socioeconomic score.

The system may be further configured to generate a report relating to the plurality of schools. The report may include survey results relating to the schools. The report may be associated with one or more findings.

The system may be configured to enable an administrator to update report, or include the one or more findings.

The system may be configured to provide white papers, learning resources, or access to community information.

In another form, the invention resides broadly in a method for educational benchmarking, the method including:
receiving workforce data defining workforce characteristics and outcome data defining educational outcomes, the workforce data and the outcome data relating to a plurality of different educational institutions;
determining, based upon the workforce data and the outcome data, one or more statistical relationships between workforce characteristics and educational outcomes;
determining, based upon the one or more statistical relationships, one or more parameters for workforce characteristics, the one or more parameters corresponding to at least one educational outcome;
comparing, one or more characteristics of an educational institution or group of educational institutions to the one or more parameters for workforce characteristics, to enable areas for improvement to be identified for that school or group of schools.

Any of the features described herein can be combined in any combination with any one or more of the other features described herein within the scope of the invention.

The reference to any prior art in this specification is not, and should not be taken as an acknowledgement or any form of suggestion that the prior art forms part of the common general knowledge.

### BRIEF DESCRIPTION OF DRAWINGS

Various embodiments of the invention will be described with reference to the following drawings, in which:
Figure 1 illustrates an educational benchmarking system, according to an embodiment of the present invention.
Figure 2 illustrates a screenshot of a school performance dashboard screen of the system of Figure 1, according to an embodiment of the present invention.
Figure 3 illustrates a screenshot of a school benchmarking screen of the system of Figure 1, according to an embodiment of the present invention.
Figure 4 illustrates a screenshot of a research screen of the system of Figure 1, according to an embodiment of the present invention.
Figure 5 illustrates a screenshot of a knowledge development screen of the system of Figure 1, according to an embodiment of the present invention.
Figure 6 illustrates an educational benchmarking method, according to an embodiment of the present invention.
Figure 7 illustrates a screenshot of a control variables selection screen of a school performance dashboard, according to an embodiment of the present invention.
Figure 8 illustrates a first screenshot of a first portion of a school performance dashboard screen, according to an alternative embodiment of the present invention.
Figure 9 illustrates a second screenshot of a second portion school performance dashboard screen, according to an alternative embodiment of the present invention.

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way.

### DESCRIPTION OF EMBODIMENTS

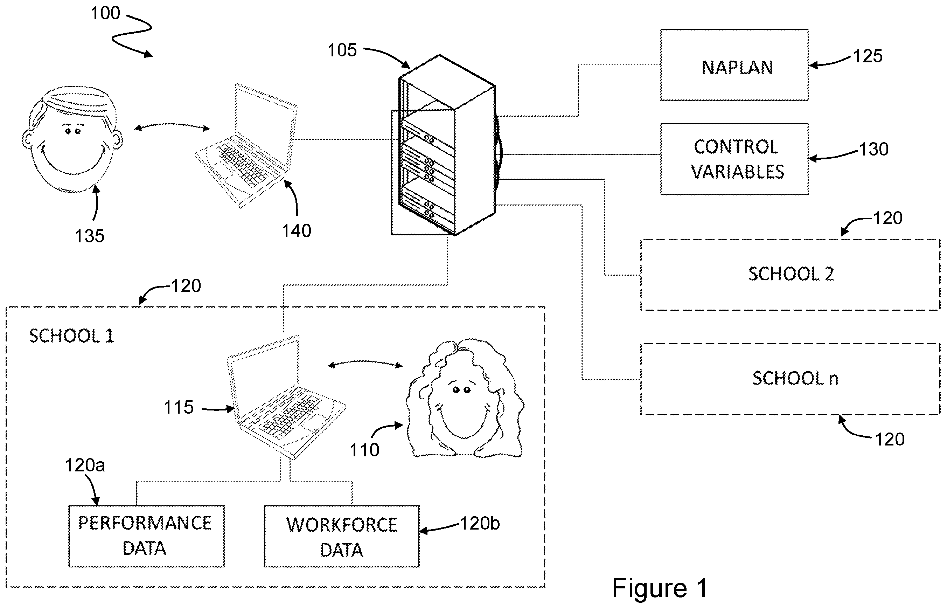

Figure 1 illustrates an educational benchmarking system 100, according to an embodiment of the present invention. The educational benchmarking system 100 is configured to enable high quality, data informed decisions about an educational institution, and in particular in relation to their workforces, with the purpose of improving student outcomes in classrooms.

The educational benchmarking system 100 includes a server 105 with which a plurality of school administrators 110 interact using respective school computing devices 115. Each of the plurality of school administrators 110 may be associated with a different school 120, and as such, the system 100 utilises data from a plurality of schools 120.

The school administrators 110 each log onto the server 105 using the computing devices 115, e.g. using a portal or interactive website associated with the server 105. An account is provided associated with each of the school administrators 110, such that the server is able to identify the school administrator 110. This in turn enables the school administrator 110 to be associated with the school 120.

The school administrator enters data into the system relating to a) the workforce of the school 120a, and b) student outcomes and progression at the school 120b. Alternatively, the data may be loaded via a bulk file load capability of the system.

The workforce data comprises workforce and employee metrics, including establishment management metrics (e.g., new hires/departures, FTE, tenure, salary), workplace health and safety metrics (e.g. work cover claims, sick leave balance, weekly working hours), capability development metrics (e.g. study assistance, professional development hours, sabbatical days taken), workforce diversity and inclusion metrics (e.g., gender, Aboriginal and Torres Strait Islander (ATSI) identification, country of birth), performance management metrics (e.g. annual performance rating), and people management metrics (e.g. number of direct and indirect reports).

The student outcome and progression data comprises performance metrics relating to the school, and includes student performance metrics (e.g., raw and value-added NAPLAN scores; raw and value-added core subjects assessment results, such as year 12 English, maths and science, overall pass or fail, tertiary entrance scores), student attendance metrics (e.g. new entry/exit, unexpected absences, disciplinary absences), student outcome metrics (e.g. completed Year 10/12, post-school destination, university acceptance), and other metrics (e.g. parent satisfaction survey results, school NOI).

In an alternative embodiment, the data may comprise raw data from which metrics may be generated. In such case, the metrics may be generated on the server 105, or elsewhere. This enables data from multiple sources to be considered together when generating the metrics.

The data may be provided manually by the school administrator 110, e.g. by uploading files comprising said data, and/or by entering the data manually. In such case, the data may be validated to determine that it is in a suitable or correct format, or within operational boundaries defined by the system.

As an illustrative example, the system 100 may require that the data in relation to one or more of the metrics is provided in comma-separate value (CSV) format. In such case the server 105 may verify that the data is in the form of a CSV file, and in such case that the data is within certain boundaries in relation to which the data is defined. As a result, the server 105 is able to identify when the school administrator 110 accidently uploads a file of the wrong type (e.g. a Word file rather than a CSV file), or if the file is of the correct type, that the data is incorrect (e.g. a different metric file is accidentally uploaded) or incomplete (e.g. a large amount of data is missing from the file).

In addition to enabling the school administrator 110 to add data manually, the school computing device 115 or the server 105 may be directly integrated with third party software of the school to enable collection of such data automatically.

In particular, the system 100 may be integrated with Human Resources (HR) or Payroll systems to automatically collect workforce and employee data, and to a school reporting system, such as the My School system of the Australian Curriculum Assessment and Reporting Authority (ACARA) or other systems used by state and federal government agencies.

The data is generally provided periodically. In the case of workforce and employee data, the data may be provided often (e.g. fortnightly) to enable changes in workforce and employee metrics to be promptly identified and corrected. In contrast, some student outcome and progression data may be provided less often (e.g. yearly), as data may simply not be available more often.

The server 105 further data inputs relating to the plurality of schools 120, including a National Assessment Program - Literacy and Numeracy (NAPLAN) data input 125 relating to the plurality of schools 120. In particular, the data includes NAPLAN results in the form of raw and progression (year-on-year gain) scores for Year 3, 5, 7, 9 in Reading, Writing, Spelling, Grammar and Punctuation, Numeracy (school-level).

In addition to workforce and employee data, and the student outcome and progression data, the server 105 includes a control variable data input 130, which provides control or context variables which are known to effect student outcome and progression. These variables would generally include socio-economic, demographic, parent educational attainment, and location variables, which relate to each of the schools 120.

Once the server 105 has all of the data, namely 1) the workforce and employee data, 2) the student outcome and progression data, 3) the NAPLAN data, and 4) the control variable data, the server 105 correlates student attainment and progression variables and workforce variables for each of the schools. As an illustrative example, the server 105 may identify that where teacher absenteeism or turnover is high, student progression is low, and where teacher absenteeism or turnover is low, student progression is high.

The server 105 then determines one or more optimal or acceptable ranges for the workforce and employee variables, based upon the data of the schools 120, creating benchmarks against which schools 120 can individually, or as a system, compare themselves. This enables the schools 120 to make decisions to invest in or attend to areas which would be considered a "red flag" where they sit outside the optimal or acceptable range, with a view of increasing performance.

The server 105 may even compare data of the schools 120 with schools that do not utilise the system 100. As such, the system 100 may be able to provide an even more accurate benchmark of performance with reference to all schools in a region or country, regardless of whether they utilise the system. As an illustrative example, NAPLAN data of all schools in a state or country may be used to determine baseline parameters, in relation to which the schools 120 are compared. This enables the system 100 to compensate for skewed data in case the performance of the schools 120 is not representative of the region as a whole.

Once the server has determined the one or more optimal or acceptable ranges for the workforce and employee variables, one or more reports are generated and provided back to the school administrator 110 using the computing device 115.

A plurality of reports may be generated, including a basic report with set high-level variables and benchmarks, which is particularly useful as a static report used each year for marketing purposes, and a standard (detailed) report with set variables and comparisons, and the option to select additional variables and comparisons.

The reports may be saved or exported in a range of formats, including as documents, such as Portable Document Format (PDF) files. The reports may also be easily recalled, enabling the user to easily compare reports that have been generated over different periods of time.

Furthermore, the system 100 may provide an ability to generate one or more customised reports, providing full flexibility to the school administrator 110 in relation to which variables and comparisons are made.

In this regard, the system enables templates to be generate relating to each of the customised reports, such that the same customised reports may be run periodically (e.g. yearly). The school administrator is able to choose how the data is displayed (e.g. table/different types of graphs/charts) in reports, and what data is used to generate the reports.

The system 100 further includes an interactive dashboard, which provides a report-like interface, with which the user interacts. In particular, the school administrator 110 may select on the dashboard which types of schools the school associated with the school administrator 110 is compared against, as well as the variables being compared. The dashboard, being interactive, automatically updates based upon these interactions.

The dashboard further enables the school administrator 110 to view year on year data in the dashboard, and thus easily see the changes in my school's data, without having to run multiple enquiries and compare the data manually.

As such, the dashboard is not only good at enabling the school administrator 110 to easily see areas of potential improvement, but also to get further details regarding such areas, including changes over time.

The dashboard and report generation tools also enable the school administrator 110 to include multiple years' worth of data in the analysis, such as the ability to calculate three-year moving averages on the data of the school 120.

Furthermore, the dashboard and report generation tools enable the school administrator 110 to generate and include metrics in an executive/board summary, which may be provided as an introduction to a detailed report or dashboard, or as a standalone report or dashboard.

In addition to the integration described above with other systems to receive data, the system may also integrate with systems to output data. As an illustrative example, in addition to providing the reports and dashboards, the system 100 is able to integrate with student reporting software, and as such, enable the school administrator 110 to use reporting and analytics tools already at their disposal.

Finally, the system 100 enables a system administrator 135 to log onto the server 105 using an administration computing device 140. The system administrator 135 may review and filter data, such that incorrect data from one school does not influence the results of other schools. Furthermore, the system administrator 135 may manually adjust certain reports, and may generate and make available global reports.

In particular, in addition to the reports generated for the school, the system 100 is further configured to generate general global reports (e.g. relating to all or a significant group of schools), which may be edited and collated with associated findings by the system administrator.

Exemplary screenshots of screens of the system 100 are now provided below. The skilled addressee will readily appreciate that these screens are simplified to illustrate concepts of the system 100, and may readily be adapted to provide more detail.

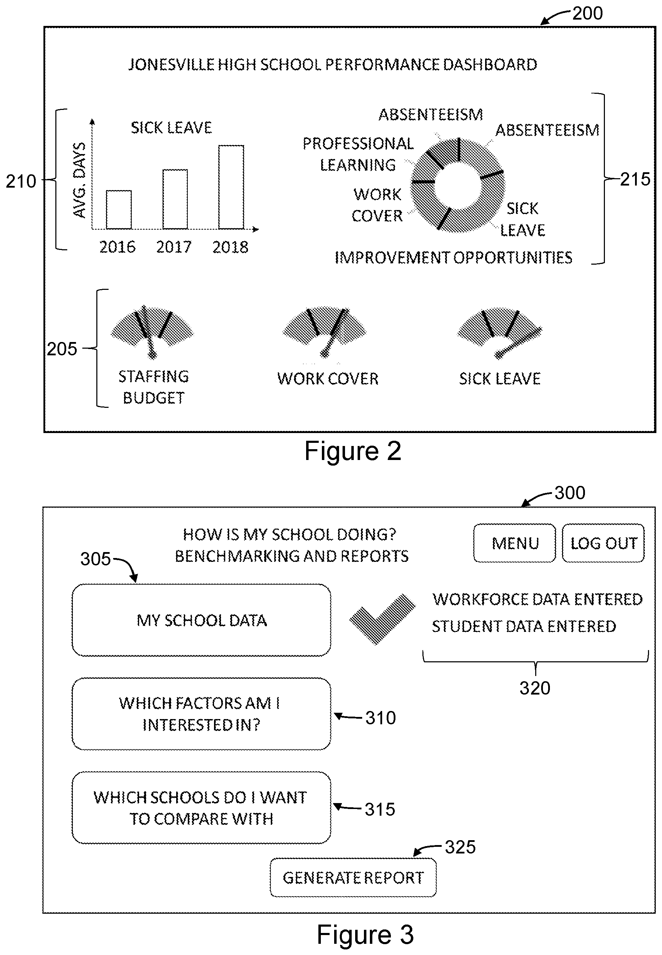

Figure 2 illustrates a screenshot 200 of a school performance dashboard screen, according to an embodiment of the present invention. The dashboard screen enables the school to compare itself with other schools in relation to one or more statistically relevant benchmarks that have been determined by the system. The school performance dashboard screen may be provided in response to the school administrator 110 providing performance and workforce data relating to the school to the server, as outlined above, and in relation to one or more benchmarks determined by the system 100.

The dashboard includes a plurality of dial charts 205 relating to a plurality of workforce metrics, which are displayed with reference to corresponding benchmarks. The dial charts 205 of Figure 2 include a staffing budget dial chart, a work cover dial chart and a sick leave dial chart, but any suitable metrics may be used. The dial charts 205 may be selected based upon their relevance to the school 120, or be manually selected by the school administrator 110.

The dial charts 205 each include a colour coded scale, including a green zone, in which the performance metric is within optimal or acceptable ranges for the workforce and employee variables, an amber (orange) zone, in which the performance metric is close, but outside of the optimal or acceptable ranges, and a red zone, in which the performance metric is clearly outside of the optimal or acceptable ranges.

The dashboard includes a historical data element 210, which illustrates one or more of the workforce metrics over time. In the case of Figure 2, the historical data element 210 illustrates sick leave over time.

Similar to the dial charts 205, the historical data element 210 may be selected based upon its relevance to the school 120, or be manually selected by the school administrator 110.

Finally, the dashboard includes an "improvement opportunities" graph 215, which illustrates a plurality of workforce metrics that relate to improvement opportunities. These workforce metrics are provided in the graph 215 according to the magnitude of their impact on performance, and thus enable the school administrator 110 to easily identify areas of potential improvement.

Figure 3 illustrates a screenshot 300 of a school benchmarking screen, according to an embodiment of the present invention. The school benchmarking screen may comprise a landing page of the server 120, i.e. a page in which the school administrator 110 lands when initially logging onto the screen.

The school benchmarking screen includes a school data button 305, which enables the school administrator 110 to enter data of the school, such as an identifier of the school, and the workforce and employee data, and the student outcome and progression data mentioned above.

The school benchmarking screen further includes a factors of interest button 310, which enables the school administrator 110 to enter details of the factors that he or she is interested in, such as sick leave, work cover leave, staffing budget and the like. As such, the school administrator 110 can ensure that the data being considered is the data that is of interest to the school administrator 110.

Finally, the school benchmarking screen includes a school comparison button 315, which enables the school administrator 110 to select which schools the system is comparing the school administrator's school to. This is useful in that the school administrator 110 may wish to compare only with public or private schools, or only schools within a particular region.

When the school data button 305, the factors of interest button 310, or school comparison button 315 are selected and data is entered, a status field 320 is provided adjacent to the associated button indicating the data that is entered.

Once all data has been entered, a report may be generated by selecting a generate report button 325. The report may comprise an interactive and dynamic report (or dashboard), or a report provided in a document.

In addition to the reports generated for the school, as outlined above, general reports (e.g. relating to all or a significant group of schools) and associated material is made available to the school administrators of the schools 120.

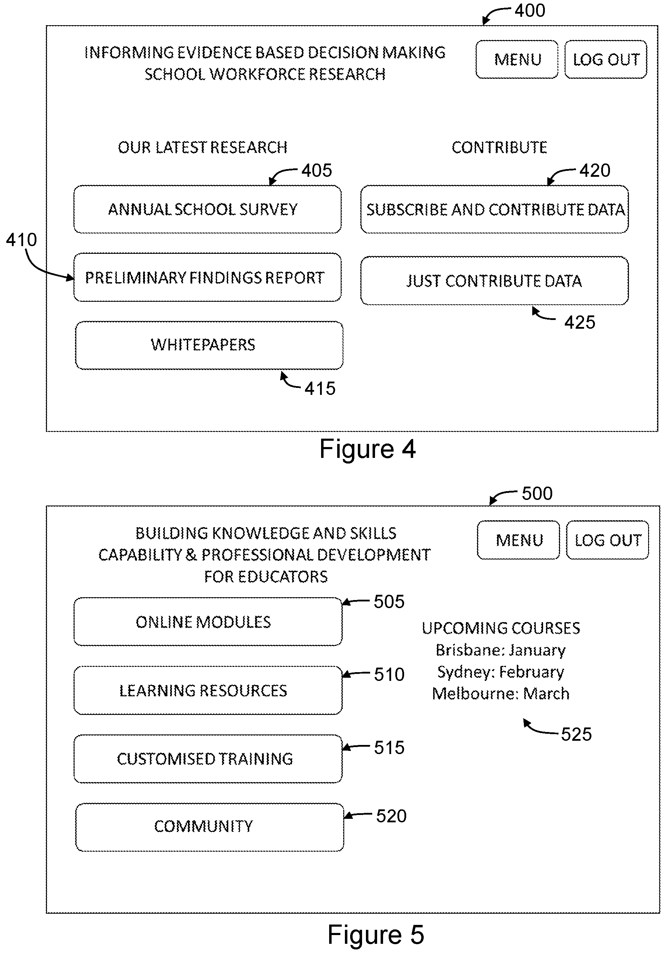

Figure 4 illustrates a screenshot 400 of a research screen of the system 100, according to an embodiment of the present invention. The research screen provides results of research, and associated information, from the schools 120 generally.

The research screen includes an annual school survey button 405, which provides access to a survey generated based upon the data of all of the schools 120. The survey data may be provided in a report or dashboard, as outlined above in relation to the schools 120, but for all schools rather than a particular school.

The research screen further includes a preliminary findings report button 410, which is generated by the administrator 110, which includes details of the core findings of the report. The preliminary findings report may illustrate major changes, typical problems, or any suitable findings from the annual school survey.

A whitepapers button 415 is provided that links to one or more white papers relating to the school survey or otherwise. For example, the white papers may include further research relating to a particular issue, such as absenteeism, or provide advice regarding such issues.

Finally, the research screen includes a data contribution buttons in the form of a subscribe and contribute data button 420, and a just contribute data button 425. The research screen may be accessible by school administrators that are yet to provide data about, and thus generate a report on their school. As such, the subscribe and contribute data button 420 and the just contribute data button 425 are provided to encourage the school administrators to provide their data to either generate a report (one off), or subscribe and have continuous and updated dashboards.

The research screen is provided to help the school administrator 110 to make decisions based upon evidence rather than intuition or experience.

Finally, the system 100 includes a knowledge development screens, as outlined below, to assist the school administrator 110 and other staff in building appropriate knowledge to enable a good understand of how to use the system 100 and the data generated therefrom.

Figure 5 illustrates a screenshot 500 of a knowledge development screen of the system 100, according to an embodiment of the present invention.

The knowledge development screen includes an online modules button 505, which links to online modules describing the system 100 and how to interpret the data provided thereby. As an illustrate example, an online module may be provided relating to why school workforce data is important, another module on how to read and interpret school workforce data, and another module on how to respond to workforce data and create a workforce strategy.

The knowledge development screen includes a learning resources button 510, which links to learning resources such as e-books, a customised training button 515, from which tailored workshops for the school 120 may be requested, and a community button 520, which links to community resources such as social media user groups, meet-up groups, as well as conferences and webinars.

Finally, the knowledge development screen includes an upcoming courses section, which provides a link to upcoming courses relating to the system.

As outlined above, the workforce data, the student outcomes and progression data, and the control variables can take various forms. Exemplary configurations of workforce data, student outcomes and progression data, and the control variables are provided below.

### EXEMPLARY WORKFORCE DATA

*Classification data* Employee ID; Gender, Age, ATSI (yes/no); Non-English Speaking Background (NESB) (yes/no); Self-identified disability (yes/no); Date joined; Highest qualification; School (if submitting system data); Role title/description; Role level (Lead, Highly Accomplished, Proficient, Graduate) (for teachers); Role type (Management, Operational, Administrative, Maintenance) (for all other staff); Employment status (full-time, part-time, casual, etc.); Contract type (continuing/permanent or fixed/contract); Full Time Equivalent (FTE); and For staff who left in the preceding 12 months: Last date of duty, Reason for leaving (e.g., End of contract, Resignation, Termination, Retirement).

*Continuing education* For staff currently completing postgraduate qualifications: Name of qualification, Type of qualification (education, theology, other); Starting date; Accessing funding support (yes/no).

*Health, safety, and absenteeism* WorkCover claims - start date, number of days claimed, and type (physical/psychological); Sick leave - start date, number of days leave taken, and whether leave was paid/unpaid; Absenteeism - start date, number of days absent, and reason. Note: For this set of metrics, it is best to provide data for each incident rather than summary data.

*Workforce cost* Total staffing budget; Total staffing actuals; Total spent on professional learning.

### EXEMPLARY SCHOOL, STUDENT OUTCOME AND PROGRESSION DATA

School ID, School name, School Type (public, private), Sector, Size, Location, Affiliations.

### NAPLAN

Raw scores for Years 3, 5, 7, 9 (all domains); Gain/progression scores for Year 3-5, 5-7, 7-9 (all domains).

*Other student data (all student data should be de-identified)* Student absenteeism (number of days absent per student in last 12 months); Completion rate as a % of enrolments for Year 10 and 12; Tertiary entrance scores; Student post-school destinations (e.g., higher education, vocational education, work, unemployment).

### EXEMPLARY CONTROL VARIABLES

School Type (Primary, Secondary, P/K-12), Sector (State, Catholic, Independent), Index of Community Socio-Educational Advantage (ICSA) Score (Normative ranges used by state government in My Schools: a-b, c-d, e-f); Size (0-300, 300-999, 1000 - 2000, >2000), Location (City, Metropolitan, Rural, Regional, Remote, Very Remote; distance from nearest capital city); Student gender (Co-educational, Single sex (Girls), Single sex (Boys)); Pedagogical affiliation (Steiner, Montessori, other), Religious affiliation (Catholic, Presbyterian and Methodist, Anglican, Jewish, Islamic, Other)

The data, whether it relates to the school, student progression, staff or the like, is kept confidential within the environment which it is provided. As an illustrative example, the data relating to, and submitted by one school, is not tagged or labelled in any way that allows other users or other schools to link that data to the school. Additionally, the system may identify when a user's preferred comparison group is too small to maintain confidentiality of the schools included. In these instances, the system may not display any data, and may instead suggest alternative parameters to broaden the comparison group to a sufficient size.

Similarly, individual employee and student identifiers (e.g. names, contact details) are not associated with the data, and are removed from any data before it is uploaded onto the server to ensure that such information remains confidential.

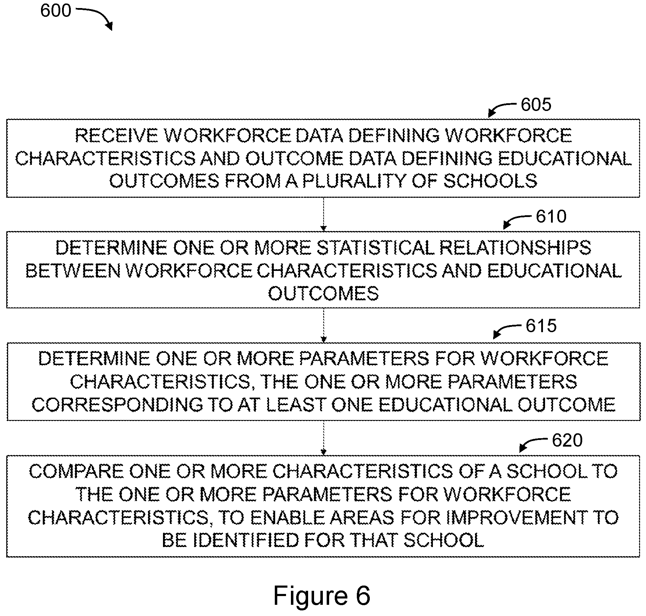

Figure 6 illustrates an educational benchmarking method 600, according to an embodiment of the present invention. The method 600 may be similar or identical to a method used by the system 100.

At step 605, workforce data defining workforce characteristics and outcome data defining educational outcomes are received. The workforce data and the outcome data relate to a plurality of different educational institutions (schools).

At step 610, one or more statistical relationships between workforce characteristics and educational outcomes are determined based upon the workforce data and the outcome data. The statistical relationships may be determined using any suitable means, and may include determining a correlation between each pair of data in the data sets, and identifying pairs of data where the correlation is high.

At step 615, one or more parameters for workforce characteristics are determined. The one or more parameters corresponding to at least one educational outcome (e.g. a minimum satisfactory educational outcome), and are determined based upon the one or more statistical relationships.

At step 620, one or more characteristics of a school or group of schools are compared to the one or more parameters for workforce characteristics, to enable areas for improvement to be identified for that school or group of schools. The characteristics may be compared to the parameters by displaying the characteristics with reference to the parameters, e.g. using a graph.

The system described above describes a school administrator 110. The skilled addressee will readily appreciate that the school administrator need not be a single individual, but can comprise a group of individuals, which may include a school principal, a school board, administrative staff or the like.

In addition to benchmarking schools, the system 100 may provide output regarding a correlation between workforce data and educational outcomes for a group of schools, such as the schools in a region or country.

In such case a correlation overview screen comprising a chart may be provided where workforce metrics and educational outcome metrics are provided along axes, and cells are used to indicate a correlation between the respective workforce metrics and educational outcome metrics.

The cells may include only correlation data where there is a statistically significant or an approaching significance relationship, so that the user is able to quickly identify which pairs of workforce metrics and educational outcome metrics are correlated. In addition to providing the correlation data in such cells, the data may be colour coded according to whether there is a significant negative relationship, a negative relationship approaching-significance, a positive relationship approaching significance, and a significant positive relationship. Such colour coding further assists the user in quickly identifying pairs of variables according to how they are correlated.

In short, strong correlations may provide an indication of where further analysis should be performed, particularly as new data is added, and identifies areas of relevance to a school which may be considered in relation to their recruitment and retention practices to get the best possible student outcomes for their investment.

Workforce variables without any significant correlation to student outcomes may also be important to note, as these variables may be less important to consider when it comes to making school workforce decisions.

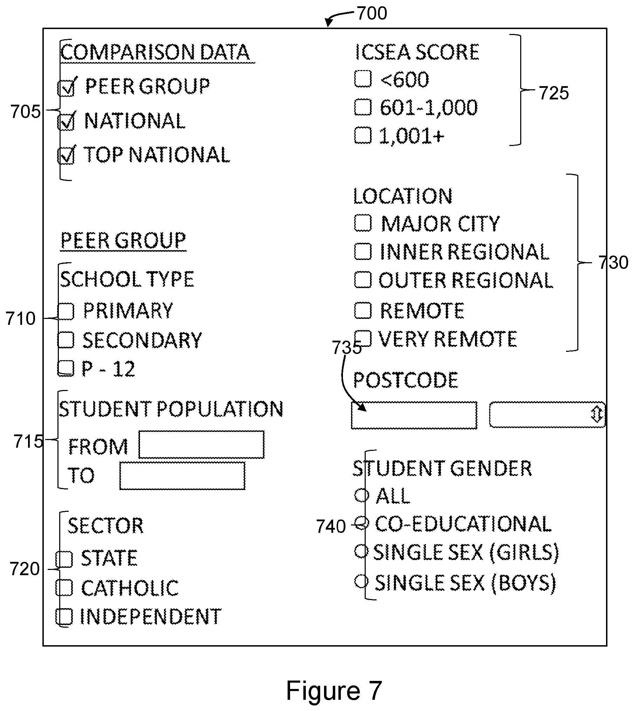

Figure 7 illustrates a screenshot 700 of a control variables selection screen of a school performance dashboard, according to an embodiment of the present invention. The control variables selection screen enables the selection of groups of comparison, and a definition of a peer group, which is used when generating a dashboard. As such, the user is in control of how the benchmarking is performed when generating a dashboard.

The control variables selection screen includes a comparison selector 705, which allows a user to select which groups are included in the comparison, with a choice of Peer, National and Top National groups. National and Top National groups are pre-defined, but the Peer group is defined according to peer configuration settings of the control variables selection screen.

The peer configuration settings of the control variables selection screen includes a school type selector 710, a student population selector 715, a sector selector 720, an ICSEA score selector 725, a location selector 730, a postcode selector 735, and a student gender selector 740.

The school type selector 710 allows a user to determine the types of schools to include in the Peer group, and options include Primary, Secondary and P-12.

The student population selector 715 allows a user to include schools in the Peer Group that have a student population that is within a range defined by user inputs.

The sector selector 720 allows a user to determine which sectors to include in the Peer group, and options include State, Independent and Catholic.

The ICSEA score selector 725 allows a user to include schools the Peer group that have an ICSEA score that matches the option selected. Options include <600, 600-1000 and >1000.

The location selector 730 allows a user to determine the locations of schools to include in the Peer group, and options include Major City, Inner Regional, Outer Regional, Remote and Very Remote.

The postcode selector 735 allows a user to determine the postcode (or postcodes) of schools to include in the Peer group.

Finally, the student gender selector 740 allows a user to determine the types of schools to include in the Peer group based on the gender of students that are taught. Options include All, Co-educational, All Boys and All Girls.

Once the user to select which groups are included in the comparison, and the peer configuration settings, a school performance dashboard is generated and displayed based upon the selected.

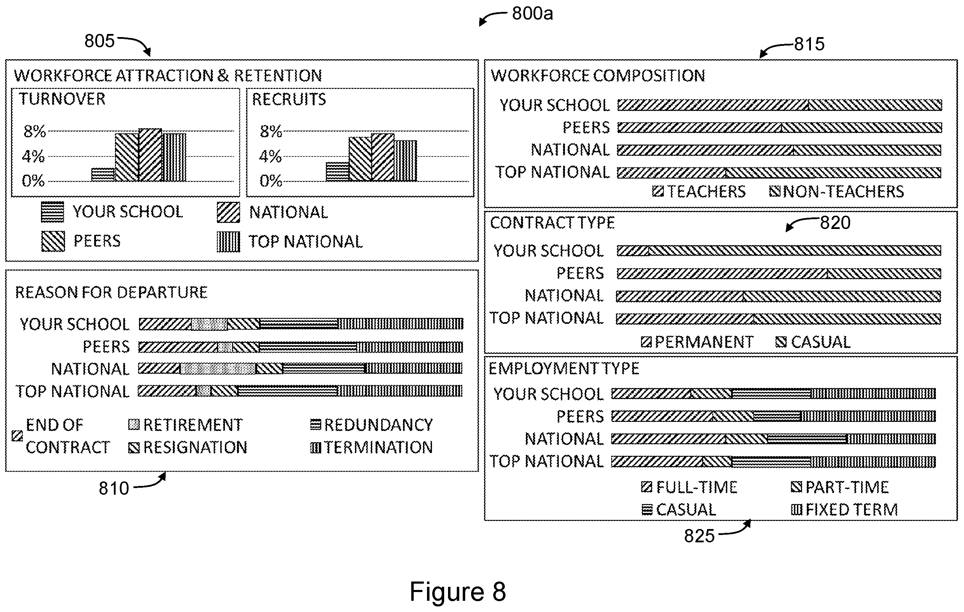

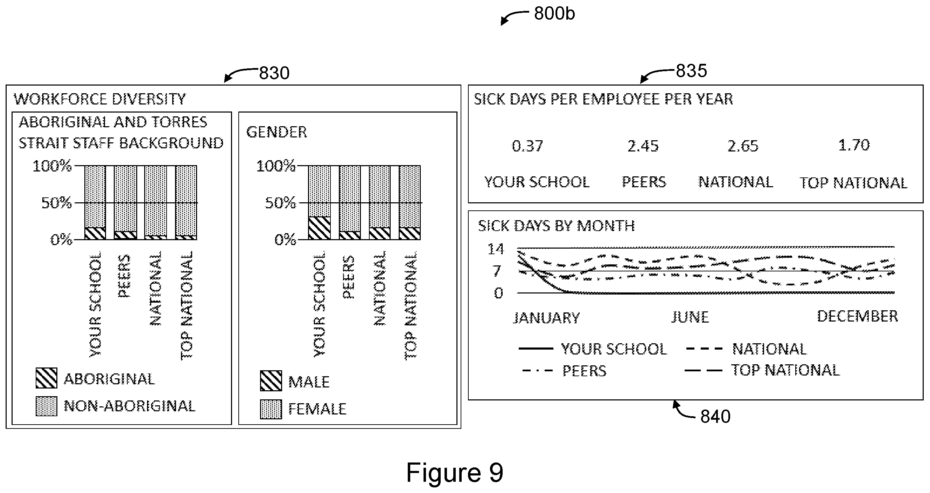

Figure 8 illustrates a first screenshot of a first portion of a school performance dashboard screen, according to an alternative embodiment of the present invention. Figure 9 illustrates a second screenshot of a second portion of the school performance dashboard screen. The dashboard screen is similar to the dashboard screen of Figure 2, and enables the school to compare with other schools in relation to one or more statistically relevant benchmarks that have been determined by the system.

The dashboard compares the school to peers, national and top national schools, as selected in the control variables selection screen.

The school performance dashboard screen includes a workforce attraction and retention section 805, which includes a plurality of metrics relating to workforce attraction and retention. These metrics may include new recruit metrics and turnover metrics

The school performance dashboard screen includes a reason for departure section 810, which includes metrics around the reason staff have departed, and reasons include End Of Contract, Retirement, Resignation, Redundancy, and Termination.

Furthermore, the school performance dashboard screen includes a workforce composition section 815, which includes workforce composition data, in the form of teacher to not-teacher ratios.

The school performance dashboard screen further includes a contract type section 820, which includes details of contract types of the teachers, including permanent and casual contract types.

The school performance dashboard screen includes an employment type section 825, which includes employment types of the teachers, including full-time, part-time, fixed-term and casual.

Furthermore, the school performance dashboard screen includes a workforce diversity section 830, which includes workforce diversity data, including Aboriginal and Torres Strait Islander identification data and gender data.

The school performance dashboard screen includes a sick days per employee section 835, and a sick days per month section 840, which illustrate sick days per employee (average) and total sick days.

The school performance dashboard screen may include any other suitable parameters, including demographic parameters, staff background information (e.g. percentage from a non-English speaking background), staff disability information, staff overtime information, age data (e.g. age distribution, and percentage of the workforce approaching retirement age (65) in the next 12 months, and the next 5 years), professional education and qualifications (e.g. professional learning costs, and post-graduate qualifications.

The metrics in the school performance dashboard screen are provided with reference to benchmarks (e.g. an average of other schools in an area, or an average of high performing schools in the area). As such, the user may easily see how the school performs with reference to these metrics.

The statistical analyses used by the system and mentioned may take any suitable form. In one embodiment, the correlation analysis is performed using Pearson's r test, which tests the relationship between two variables at a time. In another embodiment, analysis of variance between groups using a one-way Analysis of variance (ANOVA). In such case, the schools may be grouped into three groups based on their NAPLAN gain/progression scores into "high" (top 20%), "moderate" (middle 20%) and "low" (bottom 20%) performance schools, which provides a simplistic view of school performance that is effective in establishing whether particular variables distinguished the schools with the best (or worst) NAPLAN gains from the rest.

While the above has been described with reference to the educational sector, the skilled addressee will readily appreciate that the system may have utility in other sectors, such as the community services sector.

Advantageously, the systems and methods described above enable school administrators to see links between workforce data and performance, such as how absenteeism and student attainment are related, whether teacher diversity contributes to student progression, and how much turnover of staff is reasonable with respect to student performance, by providing high quality data and reporting.

Furthermore, the systems and methods enable the development of a national, potentially international, standard of workforce reporting in education.

The systems and methods are easy to use without requiring any specific training.

The systems and method enable data to be analysed that crosses State, Catholic and Independent sector boundaries, and thus is more accurate and reliable than a smaller data source.

The outputs of the systems and methods enable improved decision making for boards, system leaders and principals, as well as more effective workforce management. As a result, improved workforce performance in schools may be provided, and the outputs may be used to ensure that the teaching workforce is the right mix of skills, qualifications, age, gender, cultural diversity, and in turn improved student performance and outcomes.

Furthermore, the systems and methods provide an improved ability to demonstrate transparency and return on investment in the workforce to funders, and provide an improved capacity of schools to support their "employer of choice" status to future workforce hires. Similarly, the system may enable boards to maintain visibility on key workforce risks and cost exposure areas, such as workcover claims/rises in premiums, above benchmark or upward trending turnover, absenteeism, or retirement risk.

The systems and methods enables principals to react promptly to emergence of red flags (e.g. excessive leave liabilities, lost days, psychological injury etc.), compare their school to other schools to see how they are performing in relation to others and implement management strategies to continuously lift performance, and to proactively manage workforce issues that contribute to performance (capability investment, diversity profiles, FTE ratios etc.)

Similarly, the systems and methods provide an improved capacity to attract revenue (in competitive independent schools) through brand messaging that they have a "top performing" workforce against valid research benchmarks.

The systems and methods are open to all schools regardless of sector, while maintaining confidentiality between schools.

In the present specification and claims (if any), the word 'comprising' and its derivatives including 'comprises' and 'comprise' include each of the stated integers but does not exclude the inclusion of one or more further integers.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims (if any) appropriately interpreted by those skilled in the art.

## Claims

1. An educational benchmarking system including a server configured to:
receive, from a plurality of computing devices of a plurality of different educational institutions, workforce data defining workforce characteristics and outcome data defining educational outcomes, the workforce data and the outcome data relating to the plurality of different educational institutions;
determine, based upon the workforce data and the outcome data relating to the plurality of different educational institutions, one or more statistical relationships between workforce characteristics and educational outcomes, the one or more statistical relationships each relating to the plurality of different educational institutions based on determining a correlation between each pair of data from the workforce data and the outcome data;
determine, based upon the one or more statistical relationships, one or more variables of the workforce characteristics relating to the plurality of different educational institutions, the one or more variables correlated with at least one educational outcome, wherein the one or more variables are determined by identifying variables where the correlation with the at least one educational outcome is high;
compare, one or more characteristics of an educational institution or group of educational institutions of the plurality of different educational institutions to the one or more variables of the workforce characteristics of the plurality of different educational institutions, to enable areas for improvement to be identified for that educational institution or group of institutions; and
generating a report with the one or more variables of the workforce characteristics provided thereon, and the characteristics of the plurality of different educational institutions provided in relation thereto.

2. The educational benchmarking system of claim 1, wherein the workforce data includes absenteeism data.

3. The educational benchmarking system of claim 1, wherein the workforce data includes recruitment and turnover data, demographic data, performance data, classification data, education data, professional development data, health and safety data, and/or cost data.

4. The educational benchmarking system of claim 1, wherein the outcome data includes student result data.

5. The educational benchmarking system of claim 1, wherein the outcome data includes absenteeism data relating to students, completion rates, scores and post school destinations.

6. The educational benchmarking system of claim 1, wherein at least one of the workforce data and the outcome data is automatically verified by the system.

7. The educational benchmarking system of claim 1, wherein the workforce data and/or the outcome data, or a subset thereof, is automatically retrieved from third-party software or a third-party data source.

8. The educational benchmarking system of claim 1, wherein the characteristics of the educational institution or group of educational institutions are graphically displayed in association with the variables of the workforce characteristics.

9. The educational benchmarking system of claim 1, wherein the report is configured to show variables that have a greatest impact on educational outcomes in the school or group of schools.

10. The educational benchmarking system of claim 1, wherein the report is generated according to factors in which a user generating the report has indicated interested.

11. The educational benchmarking system of claim 1, wherein the report is interactive.

12. The educational benchmarking system of claim 1, wherein the system is configured to enable a user to select the plurality of different educational institutions from a larger group of educational institutions, wherein the selection of the plurality of different educational institutions is performed according to one or more school characteristics.

13. The educational benchmarking system of claim 1, wherein the system is configured to compare the characteristics of a school or group of schools to the one or more variables of the workforce characteristics further based upon one or more control variables.

14. The educational benchmarking system of claim 1, wherein determining the correlation between each pair of data from the workforce data and the outcome data comprises performing the correlation using a Pearson's r test.

15. A method for educational benchmarking, the method including:
receiving, at a server and from a plurality of computing devices of a plurality of different educational institutions, workforce data defining workforce characteristics and outcome data defining educational outcomes, the workforce data and the outcome data relating to the plurality of different educational institutions;
determining, at the server, based upon the workforce data and the outcome data relating to the plurality of different educational institutions, one or more statistical relationships between workforce characteristics and educational outcomes, the one or more statistical relationships each relating to the plurality of different educational institutions based on determining a correlation between each pair of data from the workforce data and the outcome data;
determining, based upon the one or more statistical relationships, one or more variables of the workforce characteristics, the one or more variables correlated with at least one educational outcome, wherein the one or more variables are determined by identifying variables where the correlation with the at least one educational outcome is high;
comparing, one or more characteristics of an educational institution or group of educational institutions of the plurality of educational institutions to the one or more variables of the workforce characteristics of the plurality of different educational institutions, to enable areas for improvement to be identified for that educational institution or group of educational institutions; and
generating a report with the one or more variables of the workforce characteristics provided thereon, and the characteristics of the plurality of different educational institutions provided in relation thereto.

## Patentansprüche

1. Ein Bildungs-Benchmarking-System mit einem Server, der konfiguriert ist,
von einer Vielzahl von Computergeräten einer Vielzahl verschiedener Bildungseinrichtungen Arbeitskräftedaten, die Arbeitskräfteeigenschaften definieren, und Ergebnisdaten, die Bildungsergebnisse definieren, zu empfangen, wobei sich die Arbeitskräftedaten und die Ergebnisdaten auf die Vielzahl verschiedener Bildungseinrichtungen beziehen;
auf der Grundlage der Arbeitskräftedaten und der Ergebnisdaten, die sich auf die Vielzahl verschiedener Bildungseinrichtungen beziehen, eine oder mehrere statistische Beziehungen zwischen den Arbeitskräfteeigenschaften und den Bildungsergebnissen zu bestimmen, wobei sich die eine oder mehreren statistischen Beziehungen jeweils auf die Vielzahl verschiedener Bildungseinrichtungen beziehen, basierend auf der Bestimmung einer Korrelation zwischen jedem Datenpaar aus den Arbeitskräftedaten und den Ergebnisdaten;
auf der Grundlage der einen oder mehreren statistischen Beziehungen eine oder mehrere Variablen der Arbeitskräfteeigenschaften mit Bezug auf die Vielzahl verschiedener Bildungseinrichtungen zu bestimmen, wobei die eine oder mehreren Variablen mit mindestens einem Bildungsergebnis korrelieren, wobei die eine oder mehreren Variablen durch Identifizieren von Variablen bestimmt werden, bei denen die Korrelation mit dem mindestens einen Bildungsergebnis hoch ist;
ein oder mehrer Merkmale einer Bildungseinrichtung oder einer Gruppe von Bildungseinrichtungen aus der Vielzahl verschiedener Bildungseinrichtungen mit einer oder mehreren Variablen der Arbeitskräfteeigenschaften der Vielzahl verschiedener Bildungseinrichtungen zu vergleichen, um Bereiche zu identifizieren, in denen Verbesserungen für diese Bildungseinrichtung oder Gruppe von Einrichtungen möglich sind;
und einen Bericht zu erstellen, in dem einen oder mehreren Variablen der Arbeitskräfteeigenschaften angegeben sind und die Merkmale der Vielzahl verschiedener Bildungseinrichtungen, die in Bezug dazu stehen.

2. Das Bildungsbenchmarking-System nach Anspruch 1, wobei die Arbeitskräftedaten Daten zu Fehlzeiten umfassen.

3. Das Bildungsbenchmarking-System nach Anspruch 1, wobei die Arbeitskräftedaten Daten zu Einstellungen und Fluktuation, demografische Daten, Leistungsdaten, Klassifizierungsdaten, Bildungsdaten, Daten zur beruflichen Weiterentwicklung, Gesundheits- und Sicherheitsdaten und/oder Kostendaten umfassen.

4. Das Bildungsbenchmarking-System nach Anspruch 1, wobei die Ergebnisdaten Daten zu den Leistungen der Schüler umfassen.

5. Das Bildungsbenchmarking-System nach Anspruch 1, wobei die Ergebnisdaten Daten zu Fehlzeiten von Schülern, Abschlussquoten, Noten und weiterführenden Bildungswegen umfassen.

6. Das Bildungsbenchmarking-System nach Anspruch 1, wobei mindestens eines der Arbeitskräftedaten und der Ergebnisdaten automatisch durch das System überprüft wird.

7. Das Bildungsbenchmarking-System nach Anspruch 1, wobei die Arbeitskräftedaten und/oder die Ergebnisdaten oder eine Teilmenge davon automatisch aus einer Software eines Drittanbieters oder einer Datenquelle eines Drittanbieters abgerufen werden.

8. Das Bildungsbenchmarking-System nach Anspruch 1, wobei die Merkmale der Bildungseinrichtung oder Gruppe von Bildungseinrichtungen in Verbindung mit den Variablen der Arbeitskräfteeigenschaften grafisch dargestellt werden.

9. Das Bildungsbenchmarking-System nach Anspruch 1, wobei der Bericht so konfiguriert ist, dass er Variablen anzeigt, die den größten Einfluss auf die Bildungsergebnisse in der Schule oder Gruppe von Schulen haben.

10. Das Bildungsbenchmarking-System nach Anspruch 1, wobei der Bericht anhand von Faktoren erstellt wird, für die ein Benutzer, der den Bericht erstellt, Interesse bekundet hat.

11. Das Bildungsbenchmarking-System nach Anspruch 1, wobei der Bericht interaktiv ist.

12. Das Bildungsbenchmarking-System nach Anspruch 1, wobei das System so konfiguriert ist, dass ein Benutzer mehrere verschiedene Bildungseinrichtungen aus einer größeren Gruppe von Bildungseinrichtungen auswählen kann, wobei die Auswahl der mehreren verschiedenen Bildungseinrichtungen anhand einer oder mehrerer Schuleigenschaften erfolgt.

13. Das Bildungsbenchmarking-System nach Anspruch 1, wobei das System so konfiguriert ist, dass es die Merkmale einer Schule oder einer Gruppe von Schulen mit einer oder mehreren Variablen der Arbeitskräfteeigenschaften vergleicht, wobei es sich ferner auf eine oder mehrere Kontrollvariablen stützt.

14. Das Bildungsbenchmarking-System nach Anspruch 1, wobei die Bestimmung der Korrelation zwischen jedem Datenpaar aus den Arbeitskräftedaten und den Ergebnisdaten die Durchführung der Korrelation unter Verwendung eines Pearson-r-Tests umfasst.

15. Verfahren zum Bildungsbenchmarking, wobei das Verfahren umfasst:
Empfangen von Arbeitskräftedaten, die Arbeitskräfteeigenschaften definieren, und Ergebnisdaten, die Bildungsergebnisse definieren, auf einem Server und von einer Vielzahl von Computergeräten einer Vielzahl verschiedener Bildungseinrichtungen, wobei sich die Arbeitskräftedaten und die Ergebnisdaten auf die Vielzahl verschiedener Bildungseinrichtungen beziehen;
Bestimmen auf dem Server auf der Grundlage der Arbeitskräftedaten und der Ergebnisdaten,
die sich auf die Vielzahl verschiedener Bildungseinrichtungen beziehen, einer oder mehrerer statistischer Beziehungen zwischen Arbeitskräfteeigenschaften und Bildungsergebnissen, wobei sich die eine oder mehreren statistischen Beziehungen jeweils auf die Vielzahl verschiedener Bildungseinrichtungen beziehen, basierend auf der Bestimmung einer Korrelation zwischen jedem
Datenpaar aus den Arbeitskräftedaten und den Ergebnisdaten;
Bestimmen einer oder mehrerer Variablen der Arbeitskräfteeigenschaften auf der Grundlage der einen oder mehreren statistischen Beziehungen, wobei die eine oder mehreren Variablen mit mindestens einem Bildungsergebnis korrelieren, wobei die eine oder mehreren Variablen durch Identifizieren von Variablen bestimmt werden, bei denen die Korrelation mit dem mindestens einen Bildungsergebnis hoch ist;
Vergleichen einer oder mehrerer Merkmale einer Bildungseinrichtung oder einer Gruppe von Bildungseinrichtungen aus der Vielzahl von Bildungseinrichtungen mit der einen oder den mehreren Variablen der Arbeitskräfteeigenschaften aus der Vielzahl verschiedener Bildungseinrichtungen, um Bereiche zu identifizieren, in denen Verbesserungen für diese Bildungseinrichtung oder Gruppe von Bildungseinrichtungen möglich sind; und
Erstellen eines Berichts mit den einen oder mehreren Variablen der Merkmale der Belegschaft, die darin angegeben sind, und den Merkmalen der Vielzahl verschiedener Bildungseinrichtungen, die in Bezug darauf angegeben sind.

## Revendications

1. Système de benchmarking éducatif comprenant un serveur configuré pour:
recevoir, à partir d'une pluralité de dispositifs informatiques d'une pluralité d'établissements d'enseignement différents, des données sur la main-d'œuvre définissant les caractéristiques de la main-d'œuvre et des données sur les résultats définissant les résultats scolaires, les données sur la main-d'œuvre et les données sur les résultats se rapportant à la pluralité d'établissements d'enseignement différents ;
déterminer, sur la base des données relatives à la main-d'œuvre et des données relatives aux résultats obtenus par plusieurs établissements d'enseignement différents, une ou plusieurs relations statistiques entre les caractéristiques de la main-d'œuvre et les résultats scolaires, chacune de ces relations statistiques étant liée à plusieurs établissements d'enseignement différents sur la base de la détermination d'une corrélation entre chaque paire de données issues des données relatives à la main-d'œuvre et des données relatives aux résultats ;
déterminer, sur la base d'une ou plusieurs relations statistiques, une ou plusieurs variables des caractéristiques de la main-d'œuvre liées à la pluralité d'établissements d'enseignement différents, la ou les variables corrélées à au moins un résultat scolaire, dans lequel la ou les variables sont déterminées en identifiant les variables pour lesquelles la corrélation avec au moins un résultat scolaire est élevée ;
comparer une ou plusieurs caractéristiques d'un établissement d'enseignement ou d'un groupe d'établissements d'enseignement parmi la pluralité d'établissements d'enseignement différents à une ou plusieurs variables des caractéristiques de la main-d'œuvre parmi la pluralité d'établissements d'enseignement différents, afin de permettre l'identification des domaines à améliorer pour cet établissement d'enseignement ou ce groupe d'établissements ;
et générer un rapport contenant la ou les variables des caractéristiques de la main-d'œuvre qui y sont fournies, ainsi que les caractéristiques de la pluralité d'établissements d'enseignement différents fournies en relation avec celles-ci.

2. Système de benchmarking éducatif selon la revendication 1, dans lequel les données relatives à la main-d'œuvre comprennent des données sur l'absentéisme.

3. Système de benchmarking éducatif selon la revendication 1, dans lequel les données relatives à la main-d'œuvre comprennent des données sur le recrutement et la rotation du personnel, des données démographiques, des données sur les performances, des données de classification, des données sur l'éducation, des données sur le développement professionnel, des données sur la santé et la sécurité et/ou des données sur les coûts.

4. Système de benchmarking éducatif selon la revendication 1, dans lequel les données sur les résultats comprennent des données sur les résultats des élèves.

5. Système de benchmarking éducatif selon la revendication 1, dans lequel les données de résultats comprennent des données d'absentéisme relatives aux élèves, les taux de réussite, les notes et les destinations après la scolarité.

6. Système d'analyse comparative en matière d'éducation selon la revendication 1, dans lequel au moins l'une des données relatives à la main-d'œuvre et des données relatives aux résultats est automatiquement vérifiée par le système.

7. Système de benchmarking éducatif selon la revendication 1, dans lequel les données relatives à la main-d'œuvre et/ou les données relatives aux résultats, ou un sous-ensemble de celles-ci, sont automatiquement récupérées à partir d'un logiciel tiers ou d'une source de données tierce.

8. Système de benchmarking éducatif selon la revendication 1, dans lequel les caractéristiques de l'établissement d'enseignement ou du groupe d'établissements d'enseignement sont affichées graphiquement en association avec les variables des caractéristiques de la main-d'œuvre.

9. Système de benchmarking éducatif selon la revendication 1, dans lequel le rapport est configuré pour afficher les variables qui ont le plus grand impact sur les résultats scolaires dans l'école ou le groupe d'écoles.

10. Système d'analyse comparative en matière d'éducation selon la revendication 1, dans lequel le rapport est généré en fonction des facteurs pour lesquels l'utilisateur qui génère le rapport a indiqué son intérêt.

11. Système d'analyse comparative en matière d'éducation selon la revendication 1, dans lequel le rapport est interactif.

12. Système de benchmarking éducatif selon la revendication 1, dans lequel le système est configuré pour permettre à un utilisateur de sélectionner la pluralité d'établissements d'enseignement différents parmi un groupe plus large d'établissements d'enseignement, la sélection de la pluralité d'établissements d'enseignement différents étant effectuée en fonction d'une ou plusieurs caractéristiques scolaires.

13. Système de benchmarking éducatif selon la revendication 1, dans lequel le système est configuré pour comparer les caractéristiques d'une école ou d'un groupe d'écoles à une ou plusieurs variables des caractéristiques de la main-d'œuvre, en se basant en outre sur une ou plusieurs variables de contrôle.

14. Système de benchmarking éducatif selon la revendication 1, dans lequel la détermination de la corrélation entre chaque paire de données provenant des données sur la main-d'œuvre et des données sur les résultats comprend la réalisation de la corrélation à l'aide d'un test r de Pearson.

15. Procédé d'analyse comparative en matière d'éducation, le procédé comprenant : la réception, sur un serveur et à partir d'une pluralité de dispositifs informatiques d'une pluralité d'établissements d'enseignement différents, de données sur la main-d'œuvre définissant les caractéristiques de la main-d'œuvre et de données sur les résultats définissant les résultats scolaires, les données sur la main-d'œuvre et les données sur les résultats se rapportant à la pluralité d'établissements d'enseignement différents ;
la détermination, au niveau du serveur, sur la base des données relatives à la main-d'œuvre et des données relatives aux résultats concernant la pluralité d'établissements d'enseignement différents, d'une ou plusieurs relations statistiques entre les caractéristiques de la main-d'œuvre et les résultats scolaires, la ou les relations statistiques se rapportant chacune à la pluralité d'établissements d'enseignement différents sur la base de la détermination d'une corrélation entre chaque paire de données provenant des données relatives à la main-d'œuvre et des données relatives aux résultats ;
déterminer, sur la base d'une ou plusieurs relations statistiques, une ou plusieurs variables des caractéristiques de la main-d'œuvre, la ou les variables corrélées à au moins un résultat scolaire, dans lequel la ou les variables sont déterminées en identifiant les variables pour lesquelles la corrélation avec au moins un résultat scolaire est élevée ;
comparer une ou plusieurs caractéristiques d'un établissement d'enseignement ou d'un groupe d'établissements d'enseignement parmi la pluralité d'établissements d'enseignement à une ou plusieurs variables des caractéristiques de la main-d'œuvre de la pluralité d'établissements d'enseignement différents, afin de permettre l'identification des domaines à améliorer pour cet établissement d'enseignement ou ce groupe d'établissements d'enseignement; et
générer un rapport contenant la ou les variables des caractéristiques de la main-d'œuvre
qui y sont fournies, ainsi que les caractéristiques de la pluralité d'établissements d'enseignement
différents fournies en relation avec celles-ci.
